(19) Europäisches Patentamt
European Patent Office
Office européen des brevets

(11) Publication number : 0 160 427
B1

(12) **EUROPEAN PATENT SPECIFICATION**

(45) Date of publication of patent specification : 06.07.88

(51) Int. Cl.⁴ : C 07 C 67/03, C 07 C 93/193, C 07 C 31/28, C 07 F 7/00, C 07 C 91/04

(21) Application number : 85302456.0

(22) Date of filing : 04.04.85

# (54) Alcoholysis of esters and metal alcoholates used in this process.

(30) Priority : 25.04.84 GB 8410497

(43) Date of publication of application : 06.11.85 Bulletin 85/45

(45) Publication of the grant of the patent : 06.07.88 Bulletin 88/27

(84) Designated contracting states : AT BE CH DE FR GB IT LI LU NL SE

(56) References cited :
EP-A- 0 063 034
DE-A- 2 157 396
FR-A- 1 469 997
FR-A- 2 379 589
GB-A- 1 174 148
GB-A- 2 128 604
US-A- 3 761 500
SYNTHESIS, February 1982, pages 138-141, Georg Thieme Verlag, Stuttgart, DE; D. SEEBACH et al.: "Titanate-mediated transesterifications with functionalized substrates"

(73) Proprietor : ALLIED COLLOIDS LIMITED
P.O. Box 38 Low Moor
Bradford West Yorkshire, BD12 0JZ (GB)

(72) Inventor : Farrar, David
5 The Grove Idle
Bradford West Yorkshire (GB)

(74) Representative : Lawrence, Peter Robin Broughton et al
GILL JENNINGS & EVERY 53-64 Chancery Lane
London WC2A 1HN (GB)

EP 0 160 427 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

It is known to be able to make esters of carboxylic acids by an ester interchange reaction according to the reaction scheme

$$RCOOR^1 + R^2OH = RCOOR^2 + R^1OH$$

In this typically R is an aliphatic or aromatic group, $R^1$ is a methyl or ethyl group and $R^2$ is an aliphatic group containing more carbon atoms than $R^1$. A catalyst is generally used in order to promote the desired exchange reaction. Various compounds have been proposed for use as the catalyst. For instance in GB-A-1573071 it is proposed to use a chelate of a beta-diketone with zirconium or calcium and the use of a mixture of such chelates is exemplified. Usually however the catalyst is a metal alcoholate and it has been proposed to form the alcoholate from the alcohol that is to be reacted in the ester interchange reaction. When the ester is unsaturated the prior art processes often lead to the formation of impurities and may involve difficult separation procedures.

In our EP-A-0118639 (unpublished at the priority date of this application) we review the relevant prior art associated with such ester interchange reactions and describe a process for the production of vinyl esters that is conducted in the presence of a metal alcoholate and in which the metal alcoholate provides the groups that go into the desired ester, the reaction being conducted in the absence of free alcohol. In particular in that process we make an ester of the formula $R^3COOR^4$ where $R^3$ is $CH_2$=CH— or $CH_2=C(CH_3)$— and $R^4$ contains at least four carbon atoms and is selected from alkyl, cycloalkyl and aminoalkyl by reaction of a compound of the formula $R^3COOR^1$, where $R^1$ is $C_{1\text{-}3}$ alkyl, in the presence of a metal alcoholate formed from an alcohol $R^4OH$ and in this process the metal alcoholate provides the groups $R^4$ that are utilised in forming the desired ester and reacts with the compound $R^3COOR^1$, the reaction is conducted in the substantial absence of water or reactive alcohol and the metal is selected from titanium, aluminium, zirconium, calcium and magnesium. We mentioned that mixtures of metals may be used and exemplify a process using a mixture of titanium and zirconium.

Processes in which the metal of the alcoholate is magnesium or calcium can be operated at relatively low temperatures, for instance 10 to 50 °C, to give good yields of the desired product. However these metal alcoholates are solids that are insoluble in the reaction mixture and in practice they can tend to result in the formation of a semi-colloidal mixture having physical characteristics such that separation, further reaction and recycling of the metal alcoholates, as described in EP-A-0118639, can give some difficulties in commercial practice.

Alcoholates in which the metal is titanium, aluminium or zirconium have the advantage that they are liquids that are miscible with the reaction mixture and so the handling difficulties are avoided. However they are less reactive with the result that the process must be conducted at elevated temperatures, generally above 70°C, and even at such temperatures the rate of reaction may not be as fast as can be achieved at much lower temperatures using, for instance, the magnesium alcoholate. Also the use of elevated temperatures is undesirable both for economic reasons and, in the context of production of vinyl esters, because of the tendency to promote the formation of unwanted polymers. For instance during prolonged operation the viscosity of the reaction mixture may gradually increase due to the formation of polymeric products. These may include polymerised vinyl ester and may include polymers containing the metal, especially when the metal includes aluminium. When the metal of the alcoholate consists solely of titanium there may be a tendency for inorganic cross-linked products based on aluminium to be formed during the process.

Despite these difficulties the process described in EP-A-0118639 is a very great improvement on any prior process for conducting the ester interchange.

Somewhat similar difficulties can also be encountered when the metal alcoholate is being used as a catalyst for an ester interchange reaction conducted in the presence of reactive alcohol.

We have now discovered that certain novel metal alcoholates are of particular value in ester interchange reactions, especially for the production of vinyl esters. These metal alcoholates contain at least two metals and are liquid at 30 °C and are miscible with the esters that participate in the ester interchange reaction.

The novel alcoholates have the formula

$$[M^1(OR^4)_{2-a}R^6_a]_x[M^2(OR^4)_{n-b}R_b^6]_y \qquad I$$

wherein

$M^1$ is selected from Mg, Ca and Ba

$M^2$ is selected from Ti, Zr and Al

n is 3 or 4 and is the valency of $M^2$

a is a number from 0 to 1.5

b is a number from 0 to 0.75 n

x + y = 1 and each is a number from 0.005 to 0.995 and is such that the compound is liquid at 30 °C.

$R^4$ is selected from alkyl having at least 4 carbon atoms, cycloalkyl having at least 4 carbon atoms and aminoalkyl, and

each group $R^6$ is individually selected from $C_{1-3}$ alkoxy and blocking groups that are substantially less reactive in the ester interchange reaction than the groups $OR^4$.

Any blocking groups will normally be a longer chain alkoxy group or will be a hydrocarbon group. Preferred blocking groups are $C_{8-30}$ alkoxy groups and alkyl groups, often $C_{8-30}$ alkyl. The preferred blocking group is $C_{18}$ alkoxide.

The alcoholate may include two or more different groups $R^6$, for instance it may include both blocking groups and $C_{1-3}$ alkoxy groups, but the catalyst before use is preferably free of $C_{1-3}$ alkoxy groups and either contains no groups $R^6$ ( a and b are both zero) or contains blocking groups (generally a and b are each up to 1). The catalyst generally includes only one group $R^4$ since if it contains different groups $R^4$ it will result in the production of mixed esters.

$R^4$ is generally cycloalkyl of 5 to 8 carbon atoms, alkyl of 5 to 30 carbon atoms or, preferably, aminoalkyl. When $R^4$ is a long chain alkyl it often contains 15 to 30 carbon atoms, preferably 20 to 24 carbon atoms. When $R^4$ is a shorter chain alkyl it is often 6 to 15 and generally 7 to 10 carbon atoms. Preferably $R^4$ is an aminoalkyl group and the alkyl group of the amino alkyl radical generally contains at least 2 carbon atoms and the radical is preferably a dialkyl aminoalkyl group of the formula $(R^5)_2N-C_nH_{2n}$, where n is two or three and the groups $R^5$, which may be the same or different, are $C_{1-3}$ alkyl. Preferably the aminoalkyl group is dimethylaminoethyl.

The values of x and y must be selected such that the catalyst is liquid at 30 °C. Generally x is below about 0.5 and often is below about 0.3. Generally it is above 0.01. Best results are generally obtained when x is from about 0.02 to about 0.1 or 0.2. If a catalyst is formed that is solid then it is generally necessary to modify it by reducing the value of x. For instance when $M^1$ is Ca or Ba it is often desirable for x to be below about 0.1 or 0.2.

Although the novel alcoholate has been shown above as having an empirical formula consisting of two components, component X being formed from the divalent metal and component Y being formed from the trivalent or tetravalent metal, it should be appreciated that this representation of the alcoholate is used for simplicity and that the precise structural relationship between the groups is a at present not entirely clear.

The alcoholate may be a simple physical mixture of components X and Y or it may be a chemical combination. For instance it may be a mixture of, e.g. titanium alcoholate and magnesium alcoholate. The alcoholate can be made by conventional methods for the production of metal alcoholates modified by the use of a mixture of metals, rather than a single metal. For instance an alcohol $R^4OH$ may be reacted with an appropriate mixture of metals $M^1$ and $M^2$ or may be reacted independently with each of the metals and the two reaction products then combined. Compounds of metals $M^1$ and/or $M^2$ may be used in place of the metals. The preferred method of making the alcoholate is by an alcohol interchange reaction as a result of reaction of an alcohol $R^4OH$ with a $C_{1-3}$ alkoxide either of a mixture of the metals $M^1$ and $M^2$ or of the individual metals $M^1$ and $M^2$ followed by combination of the resultant alcoholate. Generally the reaction is taken to completion as a result of which the final product will be free of lower alkoxy groups as $R^6$ but blocking groups may have been introduced in conventional manner.

Each of $M^1$ and $M^2$ may themselves be a mixture of two or more of the defined metals. $M^1$ is preferably magnesium or calcium. The preferred alcoholates are those in which $M^1$ is magnesium and $M^2$ is titanium or, less preferably, zirconium.

The novel alcoholates may be used in ester interchange processes either as a catalytic component or, preferably, as a reactant that supplies alkoxy groups during the process or as both. A process according to the invention is one in which a compound $R^3COOR^4$ is made by ester interchange with a compound of the formula $R^3COOR^1$ in the presence of an alcoholate derived from an alcohol $R^4OH$ and, optionally, in the presence also of the alcohol $R^4OH$, wherein $R^1$ is $C_{1-3}$ alkyl, $R^3$, alkyl, $R^3$ is an optionally substituted hydrocarbon, generally aliphatic hydrocarbon, group and $R^4$ is as defined above, and is characterised in that the alcoholate is present as a solution in the reaction mixture and is a mixed alcoholate of formula I above.

The alcoholate is generally formed before its introduction into the ester interchange reaction mixture but it may be formed within the reaction mixture. For instance either or both of the metal alcoholate components may be formed within the reaction mixture, for instance by reaction of alcohol $R^4OH$ with metals $M^1$ and/or $M^2$ or compounds thereof. It appears possible that processes in which the mixted metal alcoholate contributes groups $OR^4$ to the reaction mixture can be regarded as processes in which the magnesium, calcium or barium component of the alcoholate contributes these groups for ester interchange with the starting ester $R^3COOR^1$ whilst the alcoholate of titanium, zirconium or aluminium reacts with the resultant magnesium, calcium or barium alcoholate, typically of the formula $M^1(OR^1)_2$, to reform the desired component $M^1(OR^4)_2$. The invention therefore includes any ester interchange process conducted in the presence of an alcoholate of formula I irrespective of whether the alcoholate is a physical mixture of alcoholates of individual metals or whether it is a combined alcoholate containing both metals, and irrespective of how the combined alcoholate, or the individual components of a physical mixture of the alcoholates, has been provided into the reaction mixture.

The process is of particular value in the production of vinyl esters, and in particular in processes

wherein $R^3$ is $CH_2=CH—$ or $CH_2=C(CH_3)—$. $R^1$ is generally methyl so that the starting ester is preferably methyl acrylate or methacrylate but other suitable starting esters include ethyl acrylate and methacrylate.

The reaction is generally conducted in the absence of water.

The reaction may be conducted in the presence of alcohol $R^4OH$ to contribute some or all of the groups $OR^4$ in the final ester and so the alcoholate of formula I may be present in such processes solely or primarily as a catalyst and may be present in catalytic amounts. Preferably however the ester interchange process is conducted in the absence of water or reactive alcohol and the mixed metal alcoholate of formula I provides all the groups $OR^4$ in the final ester and this is of particular value when $R^3$ is an unsaturated group as defined above as there is a tendency for alcohol to add across the double bond and to form unwanted by-products. The preferred process is therefore a process broadly as described in EP-A-0118639 but modified by the use of the defined alcoholate.

In such processes the alcoholate may be present in molar excess, based on the starting ester, but the reaction is preferably conducted using an excess of the starting ester, for example 1.0 to 10 moles of ester per mol of alcoholate. The reaction mixture should be free of the starting alcohol or of any other alcohol that could react under the prevailing process conditions, and is generally free of any alcohol. The reaction mixture should be substantially anhydrous. Very small amounts of water or alcohol may be tolerated but even these may lead to some by-product formation.

The ester interchange processes of the invention may be carried out simply by mixing the starting ester with the chosen alcoholate. The reaction can be conducted at temperatures as high as 95 °C but best results are achieved at temperatures below 60 °C, for instance 10-50 °C. Generally the reaction is conducted at from 20-40 °C, typically around 30 °C.

The reaction is allowed to proceed towards, and often reach, equilibrium. During the process some or all of the groups $OR^4$ in the alcoholate are replaced by groups $OR^1$. The time required to reach final equilibrium depends upon the metal alcoholate and the reaction temperature but is generally 10 minutes to 2 hours. It is normally similar to the time required to reach equilibrium when the metal alcoholate is formed solely from metal $M^1$ and so is often in the range 30 to 75 minutes or less.

The process may be conducted batchwise with the desired ester and the resultant metal alcoholate being separated at the end of each batch but preferably the process is conducted continuously with the separation being conducted continuously during the process.

A preferred process of the invention is a cyclic process for making vinyl ester and in which metal alcoholate formed by ester interchange in the reaction mixture is separated from the reaction mixture and is reacted with excess alcohol $R^4OH$ in the substantial absence of ester $R^3COOR^1$ and the resultant metal alcoholate of formula I is recycled to the reaction mixture. This process has the advantage of achieving substantially total reuse of the metal whilst avoiding formation of azeotropes between the starting ester and the alcohol $R^1OH$.

The preferred process of the invention involves carrying out the following sequential steps. In step A the ester interchange reaction is conducted between the metal alcoholate formed from the alcohol $R^4OH$ and an excess of the ester $R^3COOR^1$ to form a mixture containing the ester $R^3COOR^4$, unreacted ester $R^3COOR^1$ and metal alcoholate that has at least partially been converted to an alcoholate formed from the alcohol $R^1OH$. In step B this alcoholate is separated from the reaction mixture, the ester $R^3COOR^4$ is recovered from the reaction mixture and the ester $R^3COOR^1$ is recycled for use in step A. In step C the separated alcoholate from step B is reacted, in the substantial absence of ester $R^3COOR^1$, with excess alcohol $R^4OH$ to form alcohol $R^1OH$ and alcoholate formed from the alcohol $R^4OH$. In step D this alcoholate, formed in step C, is separated and recycled for use in step A and the alcohol $R^4OH$ is recovered and recycled for use in step C. The alcohol $R^1OH$ is taken off as an end product.

Generally step B is effected by separating the alcoholate from the esters followed by separating the esters by fractional distillation, while step C is effected by separating the alcoholate from the alcohols followed by separating the alcohols by fractional distillation.

The separation of the metal alcoholate from the reaction mixture is generally achieved by evaporation of the more volatile organic components from the less volatile metal alcoholate. In order to avoid prolonged heating, this evaporation is preferably by flash evaporation. The separated alcoholate is a compound of formula I. If the reaction with alcohol $R^4OH$ has been complete the compound will be free of groups $R^6$ that are lower alkoxy groups (although it may include blocking groups $R^6$) but if the reaction has been incomplete the recycled metal alcoholate will include some lower alkoxy groups $R^6$.

The process of the invention has the advantages of the processes described in EP 0118639 (high yield of desired product, low impurities, low usage of metal alcoholate and easier separation procedures than prior art processes) together with major additional advantages.

Because of the stability of the metal alkoxide and of vinyl ester with which it is in contact it is possible to store the regenerated mixed metal alkoxide of the invention diluted with the starting methyl acrylate or other ester at convenient low temperature without incurring the risk of metal alkoxide polymerisation. The process can be operated at lower temperatures, as a homogeneous system, but at reactivity rates similar to or better than those previously attainable only in heterogeneous systems or at much higher temperatures in homogeneous systems. The metal alcoholate can be reused for much longer periods than were possible in the prior process without unacceptable build-up of by-products, increase in

difficulties of separation, or loss of activity. The risk of polymerisation of methacrylate or other vinyl ester in the homogeneous reaction mixture is reduced. The difficulties of separation and recycling associated with prior heterogeneous systems, and the risk of the formation of titanium based polymers in prior homogeneous systems, is reduced or eliminated.

The following are some examples.

## Example 1

A catalyst of formula I wherein $M^1$ is Mg, $M^2$ is Ti, a and b are zero, x is 0.05 and $R^4$ is dimethylaminoethyl is made by reacting excess dimethylaminoethanol (DMAE) with a 5 : 95 molar mixture of magnesium diisopropoxide and titanium tetra-isopropoxide. The reaction is conducted by heating the alcohol with the isopropoxides in a stirred reactor with a fractionation column and reflux splitter. Isopropanol is removed at the top of the column and vacuum is applied at the end of the reaction to remove the last traces of isopropanol. The reactor contains the desired alcoholate of formula I as a mobile liquid having no sign of precipitate. Analysis shows the product to be free of alcohol and isopropoxide groups and to have the molar analysis Mg = 0.05, Ti = 0.95, dimethylaminoethoxy = 3.9, corresponding to the formula

$$[Mg\ (DMAE)_2]_{0.05}\ [Ti\ (DMAE)_4]_{0.95}$$

In a similar manner it is possible to form the corresponding alcoholates of, for instance, calcium and titanium, magnesium and zirconium, magnesium and aluminum, and barium and titanium. In a similar manner it is possible to form magnesium titanium, and other metal, alcoholates having values of x up to 0.5.

In a similar manner it is possible to form alcoholates wherein $R^4$ is, for instance, 2-ethylhexyl or other higher alkyl or cycloalkyl group.

Alcoholates containing a blocking group $R^6$ may be made by starting with, for instance, titanium $C_{18}$ alkoxide triisopropoxide, instead of titanium tetraisopropoxide.

## Example 2

300 grams of metal alcoholate is reacted with 344 grams of methylacrylate at varying temperatures. The alcohol is DMAE. The molar ratio of methylacrylate to the dimethylaminoethanol ligand (DMAE) is 4 : 3. The formation of dimethylaminoethyl acrylate (DMAEA) is monitored by Gas Chromatography throughout the reaction. The results are then plotted assuming pseudo first order kinetics and the rate constant obtained. The higher the rate constant, the more rapid the reaction.

The reaction is conducted twice at each temperature. In reaction series A the metal alcoholate is Ti $(DMAE)_4$. In series B the metal alcoholate is the titanium magnesium alcoholate whose analysis and manufacture is given in Example 1. The results are shown in Table I.

Table I

| Temperature (°C) | Rate Constant ($min^{-1}$) x $10^2$ | |
|---|---|---|
| | A | B |
| 30 | - | 3.57 |
| 40 | - | 5.25 |
| 50 | 1.775 | 6.73 |
| 60 | 3.399 | 7.3 |
| 70 | 5.536 | 9.75 |
| 80 | 9.75 | - |
| 90 | 14.2 | - |

This shows the Mg/Ti reagent to result in a much more rapid rate of reaction than the titanium alone at the same temperature. The Mg/Ti compound is capable of inducing reaction to DMAEA even at temperatures as low as 30 °C.

A similar clear trend is observed when comparisons are made between Ti and $Ti_{0.95}$ $Ca_{0.05}$, Zr and $Zr_{0.95}$ $Mg_{0.05}$, Al and $Al_{0.95}$ $Mg_{0.05}$. A similar trend is observed when the alcohol is 2-ethylhexanol instead of DMAE.

## Example 3

Using a molar ratio of 5/3 methyl acrylate to dimethylaminoethyl ligand the rates of reaction of Ti $(DMAE)_4$ versus the Ti Mg alcoholate made in Example 1 are determined at room temperature (20 °C) by measuring the percentage of DMAEA in the reaction mixture after various reaction times in two reactions. In Reaction B 30 g of the mixed alcoholate is reacted with 43 g methyl acrylate. In reaction A 50 g Ti $(DMAE)_4$ is reacted with 71.6 g methyl acrylate.

Table 2

| Time (mins) | Reaction A | Reaction B |
|---|---|---|
| 1 | 0 | 8.9 |
| 5 | 0 | 15.8 |
| 10 | 0.9 | 19.0 |
| 30 | 2.4 | 21.5 |
| 45 | 3.7 | 22.2 |
| 60 | 5.0 | 21.5 |

This shows the faster rate of reaction using magnesium and titanium compared to the use of titanium alone.

## Example 4

3 : 1 mole ratio mixtures of methylacrylate (MA) and dimethylaminoethanol (DMAE) are reacted together at 40 °C in the presence of (A) Ti $(DMAE)_4$ and (B) $Ti_{0.5}$ $Mg_{0.5}$ $(DMAE)_3$ at a level of 2.6 mole percent catalyst based on DMAE.

Samples of the mixtures are taken at intervals and the mole % conversion of DMAE to DMAEA was recorded. The results obtained are as follows :

Table 3

| TIME (mins) | A | B |
|---|---|---|
| 0 | - | - |
| 10 | 1.0 | 38.8 |
| 25 | - | 52.9 |
| 35 | 3.5 | 57.9 |
| 50 | - | 63.0 |
| 80 | 6.5 | 66.1 |

This clearly demonstrates the advantage of catalyst according to the invention in an ester interchange conducted using a reactive alcohol.

## Example 5

In reaction A, 87.2 g of Zr $(DMAE)_4$ are weighed into a 3-neck round bottom flask fitted with a stirrer and placed in a water bath held at 40 °C. 112.8 g MA are added (molar ratio MA : DMAE = 5 : 3). The time is noted as time zero and samples of the reaction mixture are taken at varying times thereafter and analysed by GLC to determine the percentage DMAEA in the reaction mixture. In series B the process is repeated except that the alcoholate is $Zr_{0.95}$ $Mg_{0.05}$ $(DMAE)_{3.9}$. The results are shown in Table 4.

Table 4

| Reaction Time (mins) | A | B |
|---|---|---|
| 5 | 2.5 | 4.5 |
| 10 | 4.9 | 6.8 |
| 15 | 8.1 | 12.3 |
| 20 | 11.2 | 14.2 |
| 25 | 13.5 | 19.3 |
| 30 | 15.1 | 20.4 |
| 45 | 22.5 | 28.7 |
| 60 | 26.4 | 30.2 |

This shows that the incorporation of a small amount of magnesium gives a significant improvement in the rate of formation of DMAEA.

Example 6

To demonstrate the effect of varying the proportions of titanium and magnesium in the metal alcoholate a series of reactions as in Example 2 are conducted and the percentage DMAEA in the reaction mixture is recorded at 5, 30, 60 and above 180 minutes from the start of the reaction. The results are shown in Table 5.

Table 5

| Reaction Time | 100 Ti 0 Mg | 95 Ti 5 Mg | 90 Ti 10 Mg | 80 Ti 20 Mg | 50 Ti 50 Mg | 0 Ti 100 Mg |
|---|---|---|---|---|---|---|
| 5 | 0 | 2.2 | 3.8 | 7.5 | (16) | 7.7 |
| 30 | 2.4 | (10) | 9.1 | 14.3 | 24.5 | 19.5 |
| 60 | 5.0 | 17.2 | (12) | 16.8 | 25.1 | (23) |
| >180 | 24.0 | 26.5 | 25.2 | 27.8 | 25 | 27.5 |

The values in parenthesis are obtained by interpolation.

Example 7

5 moles methylacrylate are reacted with 1 mole of the titanium magnesium alcoholate made and analysed in Example 1. The reactants are charged to a reaction vessel maintained at about 40 °C. Equilibrium is obtained after about 60 minutes and the volatiles (including DMAEA) are removed by rapid distillation at 120 °C and 20 mm Hg leaving a liquid residue. The DMAEA that is separated from the volatiles is found to the substantially pure. The liquid residue is regenerated with 1 to 2 moles DMAE per mole of methoxide in the residue and methanol and DMAE are removed slowly by distillation on a rotary evaporator. The residue is recycled for further reaction with methylacrylate.

**Claims**

1. A process in which a compound $R^3COOR^4$ is made by ester interchange with a compound $R^3COOR^1$ in the presence of an alcoholate derived from an alcohol $R^4OH$ and optionally in the presence also of the alcohol $R^4OH$, wherein $R^1$ is $C_{1-3}$ alkyl, $R^3$ is an optionally substituted hydrocarbon group and $R^4$ is selected from alkyl having at least 4 carbon atoms, cycloalkyl having at least 4 carbon atoms and aminoalkyl, characterised in that the alcoholate is present as a solution in the reaction mixture and has the formula

$$[M^1(OR^4)_{2-a}R_a^6]_x\ [M^2(OR^4)_{n-b}\ R_b^6]_y \qquad I$$

wherein
$M^1$ is selected from Mg, Ca and Ba
$M^2$ is selected from Ti, Zr and Al
n is 3 or 4 and is the valency of $M^2$

a is a number from 0 to 1.5
b is a number from 0 to 0.75 n
x + y = 1 and each is a number from 0.005 to 0.995 and is such that the compound is liquid at 30 °C
$R^4$ is as defined above and
each group $R^6$ is individually selected from $C_{1-3}$ alkoxy groups and blocking groups that are substantially less reactive in the ester interchange reaction than the groups $OR^4$.

2. A process according to claim 1 conducted in the presence of the alcohol $R^4OH$ and wherein the alcoholate serves as a catalyst.

3. A process according to claim 1 wherein $R^3$ is $CH_2=CH—$ or $CH_2=C(CH_3)—$, the process is conducted in the absence of reactive alcohol and the metal alcoholate provides the groups $OR^4$ that are utilised in forming the desired ester and reacts with the compound $R^3COOR^1$.

4. A process according to claim 3 in which the metal alcoholate formed in the reaction mixture is separated from the reaction mixture and is reacted with excess alcohol $R^4OH$ in the substantial absence of ester $R^3COOR^1$ and the resultant metal alcoholate of formula I is recycled to the reaction mixture.

5. A process according to claim 4 in which the separation of the metal alcoholate is by evaporation of the esters in the reaction mixture from the metal alcoholate.

6. A process according to any preceding claim conducted in the absence of inert solvent and in the presence of excess ester $R^3COOR^1$.

7. A process according to any preceding claim in which, at the start of the process, a and b in the metal alcoholate are both zero.

8. A process according to any preceding claim in which $M^1$ is Mg and $M^2$ is selected from Ti and Zr.

9. A process according to claim 1 in which x is 0.01 to 0.5, preferably 0.02 to 0.2.

10. A process according to claim 1 in which $R^4$ is selected from $C_{5-30}$ alkyl, $C_{5-8}$ cycloalkyl and dialkylaminoalkyl of the formula $(R^5)_2N\text{-}C_nH_{2n}$ wherein n is 2 or 3 and the groups $R^5$ are the same or different and are $C_{1-3}$ alkyl.

**Patentansprüche**

1. Verfahren, in dem eine Verbindung $R^3COOR^4$ dargestellt wird durch Esteraustausch mit einer Verbindung $R^3COOR^1$ in Gegenwart eines von einem Alkohol $R^4OH$ abgeleiteten Alkoholats und gegebenenfalls auch in Gegenwart des Alkohols $R^4OH$, worin $R^1$ $C_{1-3}$-Alkyl ist, $R^3$ eine gegebenenfalls substituierte Kohlenwasserstoffgruppe ist und $R^4$ ausgewählt ist aus Alkyl mit mindestens 4 Kohlenstoffatomen, Cycloalkyl mit mindestens 4 Kohlenstoffatomen und Aminoalkyl, dadurch gekennzeichnet, daß das Alkoholat als Lösung in der Reaktionsmischung vorliegt und folgende Formel hat :

$$[M^1(OR^4]_{2-a}R_a^6]_x\ [M^2(OR^4)_{n-b}\ R_b^6]_y \qquad I$$

worin
$M^1$ aus Mg, Ca und Ba ausgewählt ist
$M^2$ aus Ti, Zr und Al ausgewählt ist
n 3 oder 4 und die Wertigkeit von $M^2$ ist
a eine Zahl von 0 bis 1,5 ist
b eine Zahl von 0 bis 0,75n ist
x + y = 1, wobei jedes eine Zahl von 0,005 bis 0,995 ist und so ist, daß die Verbindung bei 30 °C flüssig ist,
$R^4$ wie oben definiert ist und
jede Gruppe $R^6$ einzeln ausgewählt ist aus $C_{1-3}$-Alkoxygruppen und blockierenden Gruppen, die wesentlich weniger reaktiv in der Esteraustauschreaktion als die Gruppen $OR^4$ sind.

2. Verfahren nach Anspruch 1, durchgeführt in Gegenwart des Alkohols $R^4OH$ und worin das Alkoholat als Katalysator dient.

3. Verfahren nach Anspruch 1, worin $R^3$ $CH_2=CH—$ oder $CH_2=C(CH_3)—$ ist, das Verfahren in Abwesenheit von reaktivem Alkohol durchgeführt wird und das Metallalkoholat die Gruppen $OR^4$, die zur Bildung des gewünschten Esters verwendet werden, liefert und mit der Verbindung $R^3COOR^1$ reagiert.

4. Verfahren nach Anspruch 3, in dem das in der Reaktionsmischung gebildete Metallalkoholat von der Reaktionsmischung abgetrennt wird und mit einem Überschuß an Alkohol $R^4OH$ praktisch in Abwesenheit des Esters $R^3COOR^1$ zur Reaktion gebracht wird und das resultierende Metallalkoholat der Formel I zur Reaktionsmischung zurückgeführt wird.

5. Verfahren nach Anspruch 4, in dem die Abtrennung des Metallalkoholats in der Abdampfung des Esters in der Reaktionsmischung von dem Metallalkoholat besteht.

6. Verfahren nach irgendeinem der vorausgegangenen Ansprüche, durchgeführt in Abwesenheit eines inerten Lösungsmittels und in Gegenwart eines überschusses an Ester $R^3COOR^1$.

7. Verfahren nach irgendeinem der vorangegangenen Ansprüche, in dem zu Beginn des Verfahrens a und b in dem Metallalkoholat beide den Wert 0 haben.

8. Verfahren nach irgendeinem der vorangegangenen Ansprüche, in dem $M^1$ Magnesium und $M^2$

aus Ti und Zr ausgewählt ist.

9. Verfahren nach Anspruch 1, in dem x den Wert von 0,01 bis 0,5, vorzugsweise 0,02 bis 0,2, hat.

10. Verfahren nach Anspruch 1, in dem $R^4$ ausgewählt ist aus $C_{5-30}$-Alkyl, $C_{5-8}$-Cycloalkyl und Dialkylaminoalkyl der Formel $(R^5)_2N$-$C_nH_{2n}$, worin n 2 oder 3 ist und die Gruppen $R^5$ gleich oder verschieden un $C_{1-3}$-Alkyl sind.

**Revendications**

1. Procédé selon lequel un composé $R^3COOR^4$ est préparé par interchangement d'ester avec un composé $R^3COOR^1$ en présence d'un alcoolate dérivé d'un alcool $R^4OH$ et éventuellement en présence également de l'alcool $R^4OH$, où $R^1$ est un groupe alkyle en $C_{1-3}$, $R^3$ est un groupe hydrocarboné éventuellement substitué et $R^4$ est choisi parmi les groupes alkyles ayant au moins 4 atomes de carbone, cycloalkyles ayant au moins 4 atomes de carbone et aminoalkyles, caractérisé en ce que l'alcoolate est présent sous forme d'une solution dans le mélange réactionnel et à la formule

$$[M^1(OR^4)_{2-a}R_a^6]_x\ [M^2(OR^4)_{n-b}R_b^6]_y \qquad I$$

dans laquelle

$M^1$ est choisi parmi Mg, Ca et Ba

$M^2$ est choisi parmi Ti, Zr et Al

n est 3 ou 4 et est la valence de $M^2$

a est un nombre de 0 à 1,5

b est un nombre de 0 à 0,75n

$x + y = 1$ et chacun d'eux est un nombre de 0,005 à 0,995 et est tel que le composé est liquide à 30 °C

$R^4$ est comme défini précédemment et

chaque groupe $R^6$ est individuellement choisi parmi les groupes alcoxy en $C_{1-3}$ et les groupes bloquants qui sont substantiellement moins réactifs dans la réaction d'interchangement d'ester que les groupes $OR^4$.

2. Un procédé selon la revendication 1 conduit en présence de l'alcool $R^4OH$ et dans lequel l'alcoolate sert de catalyseur.

3. Un procédé selon la revendication 1, dans lequel $R^3$ est $CH_2=CH—$ ou $CH_2=C(CH_3)—$, le procédé est conduit en l'absence d'alcool réactif et l'alcoolate métallique fournit les groupes $OR^4$ qui sont utilisés dans la formation de l'ester désiré et réagit avec le composé $R^3COOR^1$.

4. Un procédé selon la revendication 3, dans lequel l'alcoolate métallique formé dans le mélange réactionnel est séparé dudit mélange réactionnel et est mis à réagir avec un excès d'alcool $R^4OH$ en l'absence substantielle de l'ester $R^3COOR^1$ et l'alcoolate métallique résultant de formule I est recyclé vers le mélange réactionnel.

5. Un procédé selon la revendication, dans lequel la séparation de l'alcoolate métallique se fait par évaporation des esters dans le mélange réactionnel de l'alcoolate métallique.

6. Un procédé selon l'une quelconque des revendications précédentes, conduit en l'absence d'un solvant inerte et en présence d'un excès d'ester $R^3COOR^1$.

7. Un procédé selon l'une quelconque des revendications précédentes, dans lequel, au départ du procédé, a et b dans l'alcoolate métallique sont tous deux égaux à zéro.

8. Un procédé selon l'une quelconque des revendications précédentes dans lequel $M^1$ est Mg et $M^2$ est choisi parmi Ti et Zr.

9. Un procédé selon la revendication 1, dans lequel x est 0,01 à 0,5, de préférence 0,02 à 0,2.

10. Un procédé selon la revendication 1, dans lequel $R^4$ est choisi parmi les groupes alkyles en $C_{5-30}$, les groupes cycloalkyles en $C_{5-8}$ et les groupes dialkylaminoalkyles de formule $(R^5)_2N$-$C_{2n}H_{2n}$ dans laquelle n est 2 ou 3 et les groupes $R^5$ sont identiques ou différents et sont des groupes alkyles en $C_{1-3}$.